# EUROPEAN PATENT SPECIFICATION

(11) **EP 3 230 011 B1**
(45) Date of publication and mention of the grant of the patent: **20.02.2019**
(21) Application number: 15805174.8
(22) Date of filing: 07.12.2015
(51) Int. Cl.: B25B 21/00, B25B 23/08, B25B 23/10

(54) **SCREW DRIVER WITH VACUUM SCREW PICK-UP FEATURE.**
SCHRAUBENDREHER MIT VAKUUMSCHRAUBEAUFNAHME
TOURNEVIS DOTÉ D'ÉLÉMENT DE PRISE DE VIS À VIDE

(30) Priority: 11.12.2014 SE 1451520
(43) Date of publication of application: 18.10.2017
(73) Proprietor: Atlas Copco Industrial Technique AB, 105 23 Stockholm Sweden (SE)
(72) Inventor: JOHANSSON, Karl, Göran, 132 37 Saltsjö-Boo (SE); MAGNUSSON, Olle, Vilhelm, 137 37 Västerhaninge (SE); ZANDER, Hans, Johan, Alfred, 139 34 Värmdö (SE)
(74) Representative: Tholin, Thomas
(86) International application number: PCT/EP2015/078751
(87) International publication number: WO 2016/091768

(56) References cited:
- CH-A- 404 584
- DE-U1- 8 610 107
- US-A1- 2008 115 628
- US-B1- 8 230 570

## Description

### Technical Field

The invention relates to a power screw driver with a vacuum screw pick-up feature. In particular the invention concerns a vacuum screw pic-up type of power screw driver having a movable nose piece connected to a vacuum source and carrying a screw guiding nozzle, wherein the nose piece is spring biased towards a forward screw pick-up position.

### Background

A problem related to power screw drivers of this type is to adapt the sub-atmospheric pressure in the nose piece to the thrust force of the nose piece bias spring. In most cases the vacuum level is too high which results in the risk that the nose piece could be retracted by suction against the action of the bias spring, whereby the screw guiding nozzle loses its guiding effect on a picked screw and causing the latter to be pushed out of the nozzle by the screw bit.

To solve this problem the vacuum level in the nose piece has to be adapted to balance the force of the bias spring. In a prior art example this has been made simply by restricting the output from the vacuum source. However, this may rise another problem, namely in cases where a number of screw drivers are connected to the same vacuum source. In such cases the vacuum force is not adaptable to what is required at each individual screw driver. Depending on different screw driver applications each screw driver may require a specific suction force to obtain an application force suitable for the actual object to be assembled. For instance, a low vacuum level, i.e. a low air pressure in the nose piece, would make the force of the bias spring dominate the suction force which would result in a high application force to be used by the operator at screw mounting operation. This is not desirable since some objects to be assembled via screw mounting operations, like printed circuit boards, are not rigid enough to withstand such high application force.

One conceivable way to individually adapt the vacuum level to what is required and/or suitable for a specific screw driver application may be to provide an adjustable air mixing valve on the conduit connecting each screw driver to the vacuum source. This problem solution is disadvantageous in that it requires specially designed conduits including this type of valves and if a conduit is exchanged for another one or another screw driver is connected to a conduit having a certain valve setting the vacuum level in the screw driver would be erroneous. This way of solving the problem also causes a somewhat awkward adjustment procedure. Also CH 404584 describes a screw driver where the vacuum can be adjusted using a valve provided on the vacuum inlet of the screw driver.

### Summary

It is an object of the invention to provide an improved vacuum screw pick-up type of power screw driver having a movable spring biased nose piece and a vacuum adjusting device by which is ensured an individual vacuum level setting for each screw driver.

It is a further object of the invention to provide a vacuum screw pick-up type of power screw driver having a movable spring biased nose piece and an adjustable device for easy individual adaptation of the vacuum generated suction force in the nose piece to the thrust force of the nose piece biasing spring.

The above mentioned objects of the invention are reached by providing a power screw driver with a vacuum screw pic-up feature as set out in the appended claims.

As has been realized by the inventors, controlling the vacuum level by controlling the vacuum applied is very difficult and leads to a screw driver that is difficult to control accurately in terms of the vacuum level. For example if the vacuum control mechanism in accordance with CH 404584 is used, it will in practice be very difficult to accurately set the desired vacuum level. This is, at least in part, due to the fact that the valve on the vacuum inlet will act to either essentially close the vacuum supply or open the vacuum supply. The result is that it will become very difficult to set any other vacuum level other than the vacuum level of the vacuum source and no vacuum. The inventors have realized that this problem can be avoided by providing an air-inlet channel connected to atmospheric pressure and control the air in the air-inlet channel to thereby control the vacuum level.

In accordance with one embodiment a power screw driver is provided. The power screw driver is has a vacuum screw pick-up feature, comprising a housing that is connectable to a vacuum source. The screw driver has a motor driven screw bit, a nose piece with a screw guiding nozzle. The nose piece is movably supported on the housing and exposed to a suction force generated by the vacuum source. A spring arranged to bias the nose piece towards an extended position. The housing is provided with a valve device for adjustment of the suction force acting on the nose piece where the valve device comprises an air inlet passage communicating at one end with the atmosphere and at an opposite end with the activation chamber and a movable valve element arranged to control the flow of atmospheric air through said air inlet passage to thereby adjust the vacuum level in said activation chamber. Hereby it is achieved that the vacuum level can be accurately and easily adjusted. The adjustment can be fine-tuned over a large range and does not suffer from the problems associated with controlling the vacuum level be controlling the vacuum supply directly.

In accordance with one embodiment the housing is formed with an activation chamber partly defined by the nose piece and connectable to the vacuum source and where the bias spring is located in the activation chamber.

In accordance with one embodiment the valve element is successively movable between a closed position and an open position.

In accordance with one embodiment the valve element is formed with a circle segment-shaped land arranged to block completely said inlet passage in the closed position and uncover completely said inlet passage in the open position.

Still further objects and advantages of the invention will appear from the following specification and claims.

### Brief description of the drawings

The invention will now be described with reference to the accompanying drawings, in which:
- Fig 1 shows a perspective view of a power screw driver according to the invention,
- Fig 2 shows on a larger scale a longitudinal section through the front end of the screw driver in Fig. 1 including the vacuum conduit connection,
- Fig. 3 shows a longitudinal section somewhat different from Fig. 2 illustrating the vacuum adjusting device in its fully open position, and
- Fig. 4 shows the same section as Fig. 3 but illustrates the vacuum adjusting device in its closed position.

### Detailed description

The power screw driver shown in the drawings comprises a housing 10 with a non-illustrated electric motor which is powered via cable connection 11 and drivingly connected to a screw bit 13. At its front end the housing 10 is provided with a nose piece 14 carries a screw guiding nozzle 15 and surrounds the screw bit 13. The nose piece 14 is longitudinally movable relative to the housing 10 and forms a part of an activation chamber 16 which is connected to a non-illustrated vacuum source via a conduit and a conduit connection 17. In the activation chamber 16 there is provided a spring 18 which is arranged to exert a forward directed bias force on the nose piece 14, in order to move the nose piece 14 relative the housing 10, towards an extended position. The vacuum conduit connection 17 is situated on a lateral service block 20 and communicates with activation chamber 16 via a circumferential groove 22 in the housing 10.

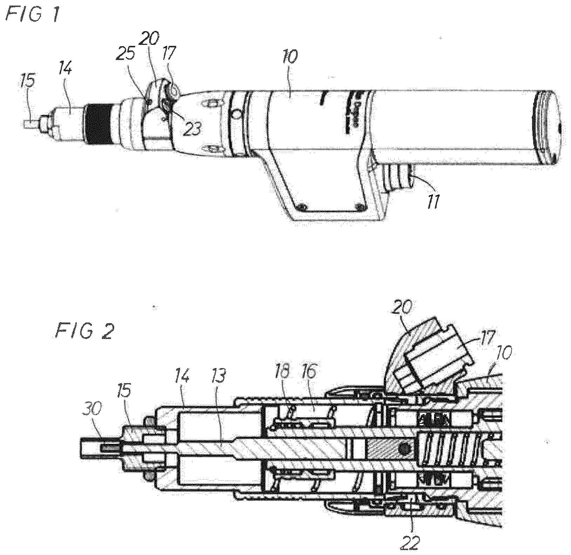

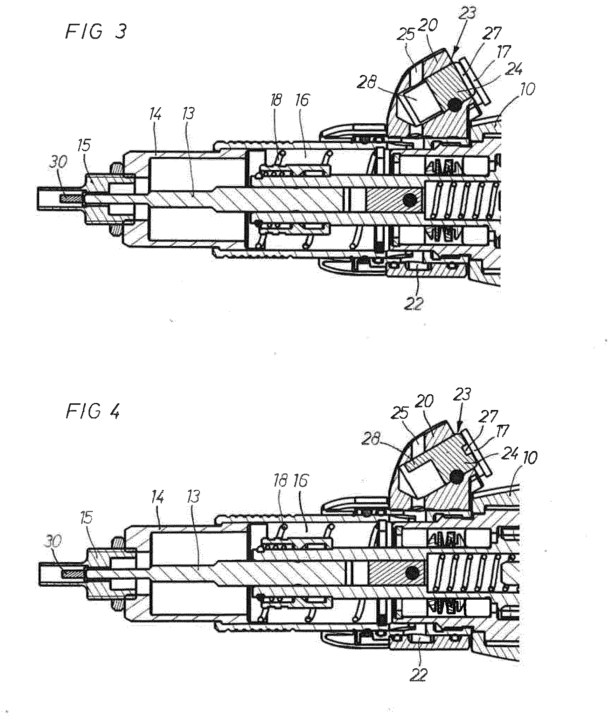

As apparent from Fig. 1 a valve device 23 is provided on the service block 20 adjacent the conduit connection 17 and is intended for adjustment of the vacuum level within the activation chamber 16. The valve device 23 comprises a valve element 24 and an air inlet passage 25 communicating with the ambient atmosphere. The valve element 24 is rotatable in the service block 20 between an open position (Fig. 3) and a closed position (Fig.4). For that purpose the valve element 24 is provided with an external slot 27 for engagement with a screw driver. At its inner end the valve element 24 is formed with a land 28 shaped like a circle segment and arranged to block the air inlet passage 25 in the closed position of the valve element 24. See Fig. 4.

In operation, the power screw driver is connected to a vacuum source via a conduit connected to the housing 10 via the conduit connection 17, whereby the pressure inside the activation chamber 16 is lowered and propagates to the nose piece 14 and the screw guiding nozzle 15 via the groove 22 and the activation chamber 16. The sup-atmospheric pressure in the nozzle 15 makes it possible to pick up a screw 30 by suction and bring it into contact with the screw bit 13. Then, the screw driver is ready to start a screw mounting operation.

The sub-atmospheric pressure accomplished in the activation chamber 16 exerts an inwardly directed force on the nose piece 14, and due to the bias force by the spring 18 the nose piece 14 is prevented from being moved backwards into the activation chamber 16. However, when the screw driver is brought into engagement with an object to be assembled and having the nozzle 15 pressed against the surface of the object the nose piece 14 is pressed backwards into the activation chamber 16 against the action of the bias spring 18. Thereby, the picked-up screw 30 is pushed forwards and rotated by the screw bit 13 for a mounting operation. As the screw 30 is properly mounted on the object the power screw driver motor is stopped and the tool is lifted off the object, whereby the nose piece 14 is returned to its forward rest or start position by the spring 18 against the suction force still acting by the vacuum in the activation chamber 16.

In order to adjust and set the vacuum level within the activation chamber 16 and thereby accomplish a balance between the bias force of the spring 18 and the accomplished suction force the valve element 24 is rotated to open up to a certain extent the inlet passage 25, whereby a certain amount of atmospheric air is lead into the activation chamber 16. This results in a lowering of the vacuum level in the activation chamber 16 and a decreased suction force on the nose piece 14 is accomplished. This means that the suction force will not dominate the bias force of the spring 18.

By adjusting and setting the valve device 23 it is possible to balance the sub-atmospheric pressure in the activation chamber 16 against the bias force of the spring 18 to thereby minimize the required application pressure of the screw driver onto an object during screw mounting operations and at the same time reduce the risk for the nose piece 14 to be retracted into the activation chamber due to a too high vacuum level.

It is to be understood that the embodiments of the invention are not limited to the described example but may be freely varied within the scope of the claims. In particular some described elements can be omitted. In accordance with some embodiments some elements can be substituted to well-known elements serving the same purpose.

## Claims

1. A power screw driver with a vacuum screw pick-up feature, comprising a housing (10) connectable to a vacuum source, a motor driven screw bit (13), a nose piece (14) with a screw guiding nozzle (15), wherein the nose piece (14) is movably supported on the housing (10) and exposed to a suction force generated by the vacuum source, and a spring (18) arranged to bias the nose piece (14) towards an extended position, **characterized in that** the housing (10) is provided with a valve device (23) for adjustment of the suction force acting on the nose piece (14) wherein said valve device (23) comprises an air inlet passage (25) communicating at one end with the atmosphere and at an opposite end with an activation chamber (16), and a movable valve element (24) arranged to control the flow of atmospheric air through said air inlet passage (25) to thereby adjust the vacuum level in said activation chamber (16).

2. A power screw driver according to claim 1, wherein the housing (10) is formed with the activation chamber (16) partly defined by the nose piece (14) and connected to the vacuum source, said bias spring (18) being located in said activation chamber (16).

3. A power screw driver according to claim 1 or 2, wherein said valve element (24) is successively movable between a closed position and an open position.

4. A power screw driver according to claim 3, wherein said valve element (24) is formed with a circle segment-shaped land (28) arranged to block completely said inlet passage (25) in said closed position and uncover completely said inlet passage (25) in said open position.

## Patentansprüche

1. Kraftschrauber mit einer Vakuum-Schraubenaufnahmefunktion, umfassend ein Gehäuse (10), das an eine Vakuumquelle anschließbar ist, einen motorisierten Schraubeinsatz (13), ein Mundstück (14) mit einer Schraubenführungsdüse (15), wobei das Mundstück (14) an dem Gehäuse (10) bewegbar gehalten wird und einer Saugkraft ausgesetzt ist, die durch die Vakuumquelle erzeugt wird, und eine Feder (18), die angeordnet ist, um das Mundstück (14) in Richtung auf eine ausgezogene Position vorzuspannen, **dadurch gekennzeichnet, dass** das Gehäuse (10) mit einer Ventilvorrichtung (23) zum Anpassen der Saugkraft, die auf das Mundstück (14) einwirkt, versehen ist, wobei die Ventilvorrichtung (23) einen Lufteinlassdurchgang (25), der an einem Ende mit der Atmosphäre und an einem gegenüberliegenden Ende mit einer Aktivierungskammer (16) in Verbindung steht, und ein bewegbares Ventilelement (24), das angeordnet ist, um die Strömung von atmosphärischer Luft durch den Lufteinlassdurchgang (25) zu regeln, um dadurch das Vakuumniveau in der Aktivierungskammer (16) anzupassen, umfasst.

2. Kraftschrauber nach Anspruch 1, wobei das Gehäuse (10) gebildet ist, indem die Aktivierungskammer (16) teilweise durch das Mundstück (14) definiert ist und an die Vakuumquelle angeschlossen ist, wobei sich die Vorspannfeder (18) in der Aktivierungskammer (16) befindet.

3. Kraftschrauber nach Anspruch 1 oder 2, wobei das Ventilelement (24) nacheinander zwischen einer geschlossenen Position und einer offenen Position bewegbar ist.

4. Kraftschrauber nach Anspruch 3, wobei das Ventilelement (24) mit einer kreissegmentförmigen Fase (28) gebildet ist, die angeordnet ist, um den Einlassdurchgang (25) in der geschlossenen Position vollständig zu blockieren und den Einlassdurchgang (25) in der offenen Position vollständig freizulegen.

## Revendications

1. Tournevis électrique doté d'un élément de prise de vis à vide, comprenant un boîtier (10) apte à être relié à une source de vide, un embout de vis (13) entraîné par moteur, une partie nez (14) avec une buse de guidage de vis (15), la partie nez (14) étant supportée de manière mobile sur le boîtier (10) et exposée à une force d'aspiration générée par la source de vide, et un ressort (18) agencé pour solliciter la partie nez (14) vers une position étendue,
**caractérisé par le fait que** le boîtier (10) comporte un dispositif de soupape (23) pour l'ajustement de la force d'aspiration agissant sur la partie nez (14), ledit dispositif de soupape (23) comprenant un passage d'entrée d'air (25) communiquant à une extrémité avec l'atmosphère et à une extrémité opposée avec une chambre d'activation (16), et un élément de soupape mobile (24) agencé pour commander l'écoulement d'air atmosphérique à travers ledit passage d'entrée d'air (25) pour ainsi ajuster le niveau de vide dans ladite chambre d'activation (16) .

2. Tournevis électrique selon la revendication 1, dans lequel le boîtier (10) est formé avec la chambre d'activation (16) partiellement définie par la partie nez (14) et reliée à la source de vide, ledit ressort de sollicitation (18) étant situé dans ladite chambre d'activation (16).

3. Tournevis électrique selon la revendication 1 ou 2, dans lequel ledit élément de soupape (24) est successivement mobile entre une position fermée et une position ouverte.

4. Tournevis électrique selon la revendication 3, dans lequel ledit élément de soupape (4) est formé avec un talon en forme de segment de cercle (28) agencé pour bloquer entièrement ledit passage d'entrée (25) dans ladite position fermée et pour découvrir entièrement ledit passage d'entrée (25) dans ladite position ouverte.
